# EUROPEAN PATENT SPECIFICATION

(11) **EP 2 370 726 B1**
(45) Date of publication and mention of the grant of the patent: **10.07.2013**
(21) Application number: 09799624.3
(22) Date of filing: 18.12.2009
(51) Int. Cl.: F16M 13/02

(54) **A HANGER APPARATUS**
AUFHÄNGUNGSVORRICHTUNG
APPAREIL DE SUSPENSION

(30) Priority: 30.12.2008 TR 200810021
(43) Date of publication of application: 05.10.2011
(73) Proprietor: Arçelik Anonim Sirketi, 34950 Istanbul (TR)
(72) Inventor: CELIKKOL, Emre, 34950 Istanbul (TR); KASAPOGLU, Sevginar, 34950 Istanbul (TR); TEKCE, Hakki Serkan, 34950 Istanbul (TR); MERT, Gokhan, 34950 Istanbul (TR); KOCAMAN, Fatih, 34950 Istanbul (TR)
(86) International application number: PCT/EP2009/067602
(87) International publication number: WO 2010/076250

(56) References cited:
- WO-A1-2007/131938
- WO-A2-2008/004759
- DE-U1-202008 005 573
- US-A1- 2006 266 898

## Description

**Technical field**

The present invention relates to a hanger apparatus for attaching electronic devices to a flat surface.

**The Prior Art**

Nowadays, the electronic devices are attached to various surfaces for not creating cable tangle and for not occupying too much space in the place of use. Attaching the electronic devices is realized by the hanging apparatus used. In case a malfunction occurs in the electronic devices attached to the state of the art hanging apparatus, detaching the electronic device from the hanger apparatus is not easy due to the connection therebetween. Moreover, the electronic device is just inserted into the state of the art hanger apparatus and not locked into the apparatus. In this case sometimes the electronic device is dislodged from the hanger apparatus and damaged by falling down because of the wear of the connection between the electronic device and the hanger apparatus.

In the state of the art European Patent No EP1920599, an apparatus is described which is used for attaching flat screen display devices on the wall. The said apparatus is attached to the display device by means of hooks having latch mechanism.

In the state of the art United States of America Patent Document No US6480243, a fixing frame is described for providing the flat screen television to be fixed onto the wall. The said fixing frame is first fastened onto the wall and afterwards the television is attached on the said frame.

In the state of the art United States of America Patent Document No US2006237380, a wall hanging system is described wherein particularly the angle in the vertical axis of the object to be hung on the wall can be adjusted. Another state of the art example is WO 2007 131g38.

Brief Description of the Present Invention

The aim of the present invention is the realization of a hanger apparatus which provides attaching electronic devices onto a flat surface and to safely hold the electronic device attached thereon.

The hanger apparatus realized in order to attain the aim of the present invention, explicated in the first claim and the dependent claim thereof, comprises a hole, a tongue, a detent means providing the locking with the electronic device and a locking mechanism having a plate consisting of a pin that changes the position of the detent means and at least one push bolt providing the required motion for locking and having a gap thereon.

In the hanger apparatus of the present invention, two different positions are provided on the gap whereinto the pin is inserted. The locking mechanism is either in the free position or the locked position according to the position of the pin.

One end of the plate in the hanger apparatus of the present invention is fastened to the body of the apparatus and the other end is in an opening inside the apparatus so that it can stretch as the pin changes position. Accordingly, as the position of the pin in the gap changes, the plate can move by stretching thus providing the detent means to be lodged, dislodged into/from the socket on the electronic device.

Detailed Description of the Present Invention

The hanger apparatus realized in order to attain the aim of the present invention is illustrated in the attached figures, where:

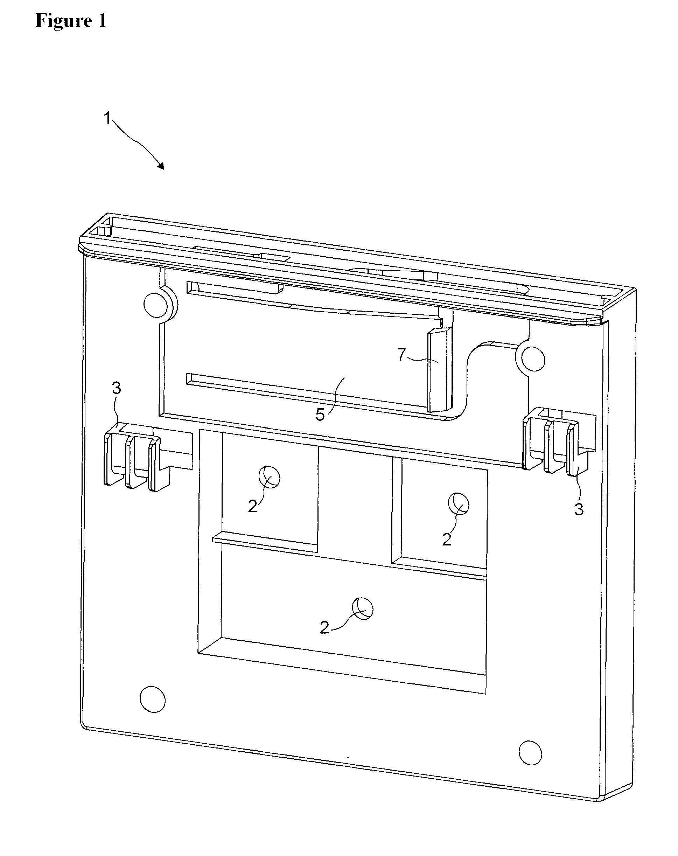

Figure 1 - is the front view of the hanger apparatus when the push bolt is not mounted.

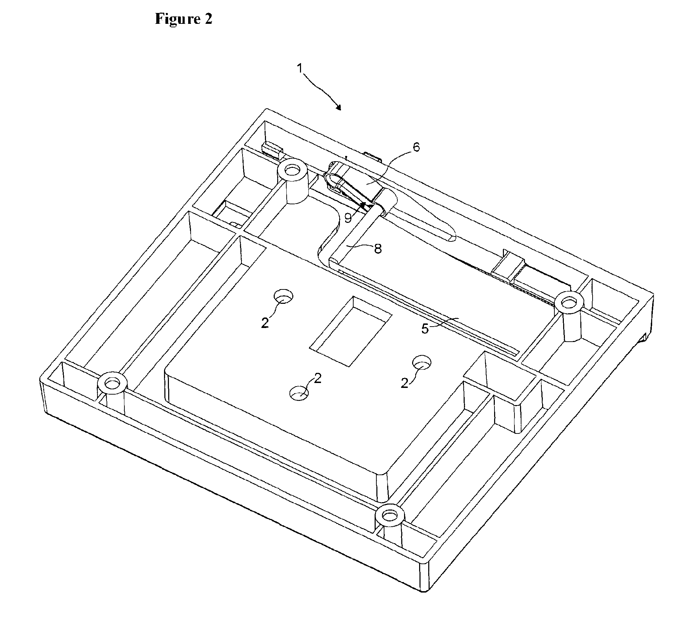

Figure 2 - is the rear view of the hanger apparatus when the push bolt is mounted.

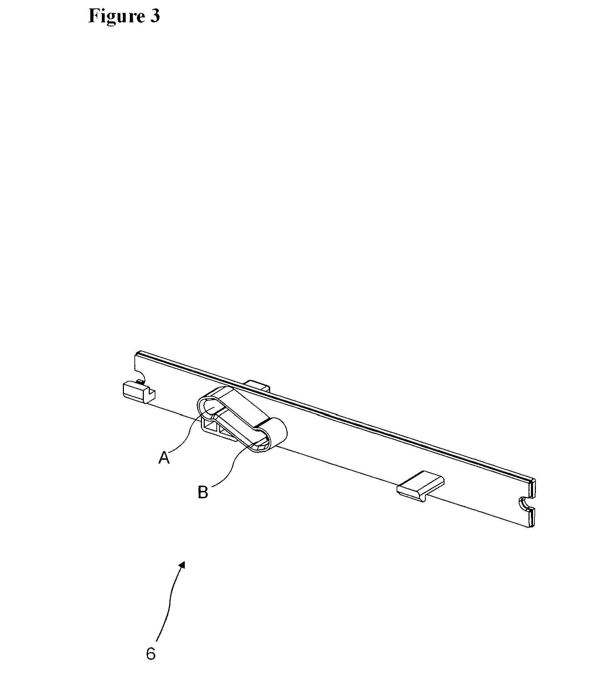

Figure 3 - is the perspective view of the push bolt.

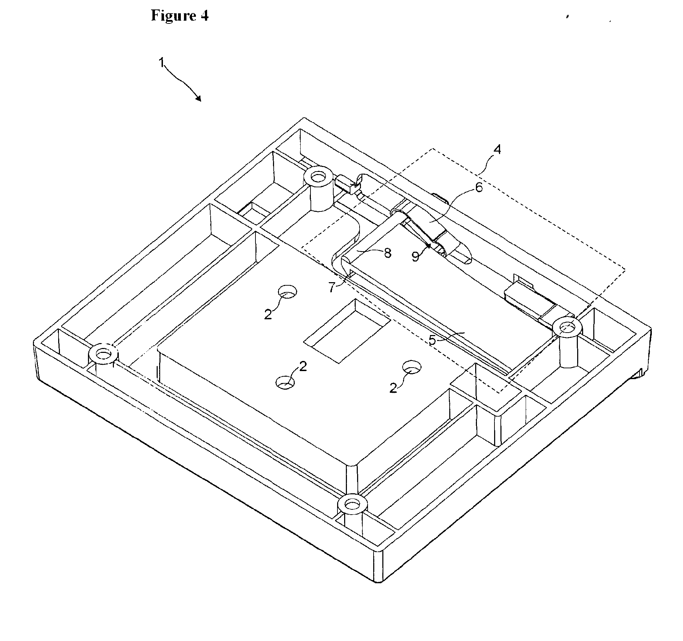

Figure 4 - is the view of the locking mechanism in the free position.

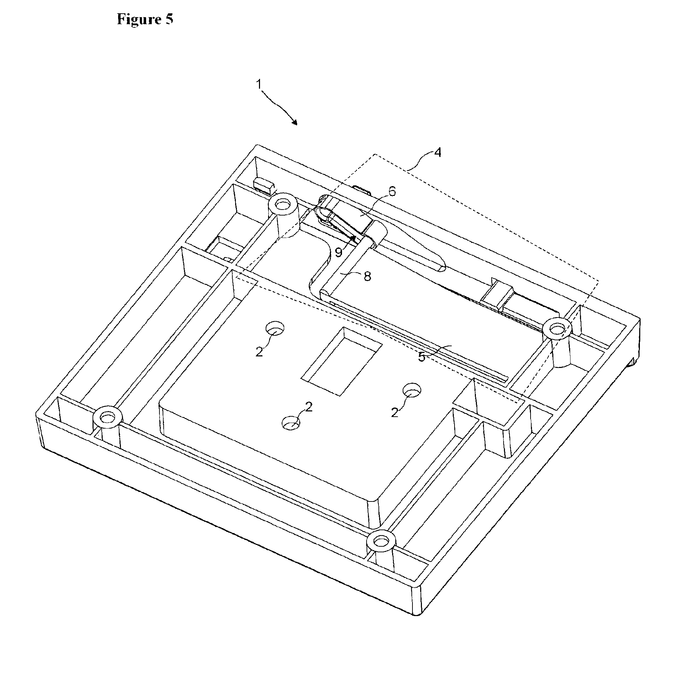

Figure 5 - is the view of the locking mechanism in the locked position.

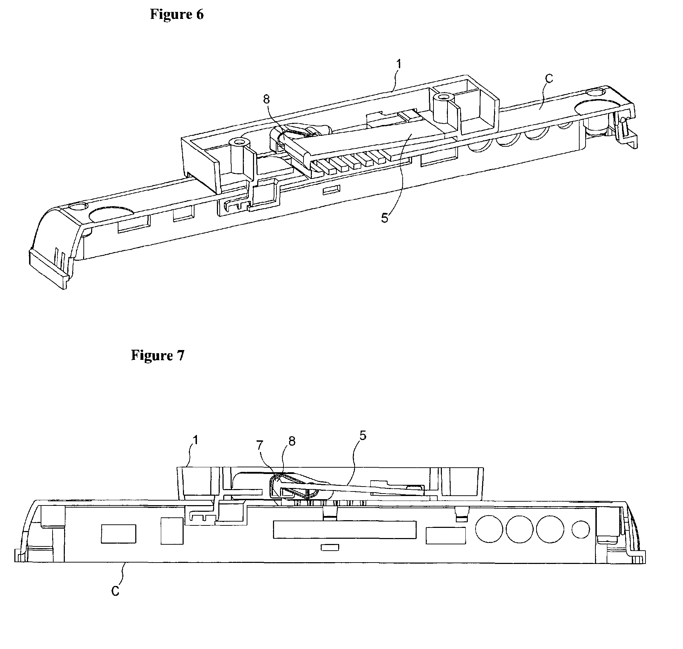

Figure 6 - is the view of the hanger apparatus and the electronic device before being locked.

Figure 7 - is the cross sectional view of Figure 6.

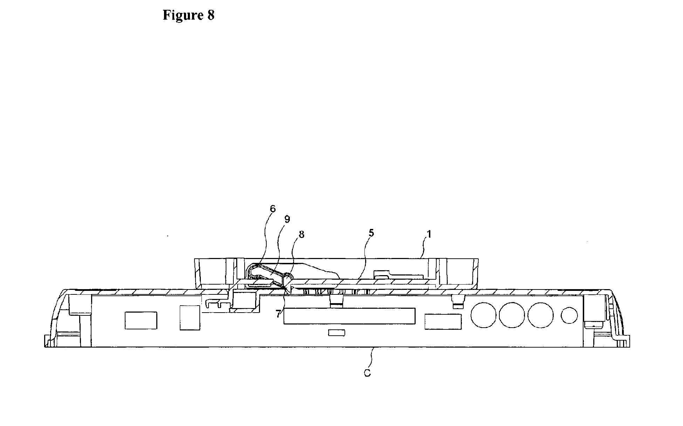

Figure 8 - is the view of the hanger apparatus and the electronic device after being locked.

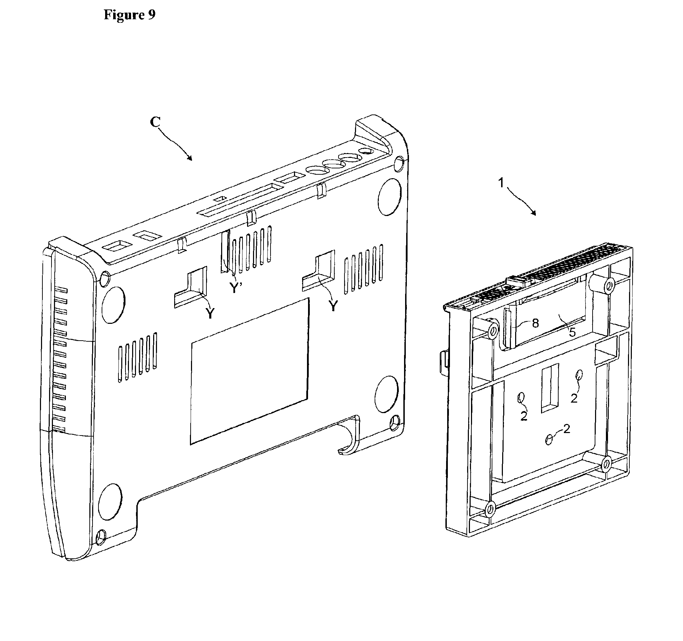

Figure 9 - is the view of the television before being mounted on the hanger apparatus in an embodiment of the present invention.

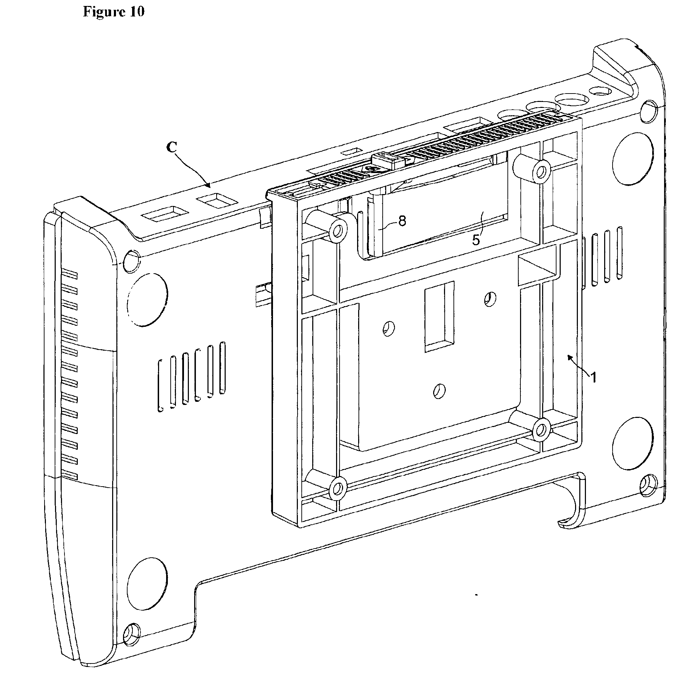

Figure 10 - is the view of the television being mounted on the hanger apparatus in an embodiment of the present invention.

The elements illustrated in the figures are numbered as follows:
1. Hanger apparatus
2. Hole
3. Tongue
4. Locking mechanism
5. Plate
6. Push bolt
7. Detent means
8. Pin
9. Gap

The hanger apparatus (1) comprises at least one hole (2) which provides attaching to a surface, at least one tongue (3) for attaching to the electronic device (C) and at least one locking mechanism (4) which provides locking with the electronic device (C).

The locking mechanism (4) comprises a plate (5) consisting of a detent means (7) which provides locking with the electronic device (C) and a pin (8) that changes the position of the detent means (7), at least one push bolt (6) having at least one gap (9) serving as a channel for the pin (8) and providing the required motion for locking.

One end of the plate (5) is fastened to the body of the hanger apparatus (1) and the other end is free in the opening. The pin (8) is disposed on one surface of its free end and the detent means (7) on the other surface. As the position of the pin (8) inside the gap (9) changes, the plate (5) stretches from its free end and provides the detent means (7) to move.

There are at least two different positions (A, B) inside the gap (9) wherein the pin (8) can be positioned. When the pin (8) is in one of the said positions (A, B), the detent means (7) is locked to the socket (Y') on the electronic device (C) and in the other position, the electronic device (C) is freed.

The hanger apparatus (1) is fixed on a surface (for example the wall, ceiling) with the fastening elements inserted into the holes (2) thereon. The sockets (Y) on the electronic device (C) are seated on the tongues (3) disposed on the hanger apparatus (1) and thus the hanger apparatus (1) can provide the carrying of the electronic device (C). The electronic device (C) seated on the hanger apparatus (1) and the hanger apparatus (1) are locked thereafter by means of the locking mechanism (4), accordingly the hanger apparatus (1) can safely support the electronic device (C).

The pin (8) disposed on the plate (5) changes position inside the gap (9) as a result of the motion of the push bolt (6). As the position of the pin (8) changes, the plate (5) moves and the detent means (7) at the end of the plate (5) is lodged, dislodged into/from the socket (Y') on the electronic device (C).

In an embodiment of the present invention, the push bolt (6) moves in the horizontal direction. In the free position, the pin (8) is at the high position (A) of the gap (9). In this position the end of the detent means (7) is free and does not contact the electronic device (C). With the motion of the push bolt (6) in the horizontal direction, the pin (8) moves to the lower position (B) inside the gap (9). The plate (5) moves by the movement of the pin (8) and the detent means (7) at the end of the plate (5) is inserted into the socket (Y') on the electronic device (C). In this position, the hanger apparatus (1) and the electronic device (C) become locked to one another.

In an embodiment of the present invention, the hanger apparatus (1) is used for fixing the television to the wall. Firstly, the hanger apparatus (1) is fixed onto the wall. Afterwards, the television is attached to the hanger apparatus (1) by seating the sockets (Y) on the rear side to the tongues (3). In this position, locking is not yet accomplished and the pin (8) that will provide the locking is at the high position (A) in the gap (9). As the push bolt (6) is moved, the pin (8) passes to the low position (B) of the gap (9) and the detent means (7) is inserted into the socket (Y') at the rear surface of the television. Thus, the hanger apparatus (1) and the television are locked to one another.

The present invention is principally as explicated in the claims and it is possible to develop a wide range of embodiments of the hanger apparatus (1) based on this basic concept but cannot be limited to the embodiments explained herein; but only by the appended claims.

## Claims

1. A hanger apparatus (1) comprising at least one hole (2) for securing to a surface, at least one tongue (3) for fastening to the electronic device (C), and a locking mechanism (4) comprising
- a plate (5) comprising at least one detent means (7) which provides locking with the electronic device (C) and at least one pin (8) that changes the position of the detent means (7) and,
**characterized in that,** the locking mechanism comprises at least one push bolt (6) providing the required motion for locking, the push bolt (6) has at least one gap (9) serving as a channel for the pin (8), the pin (8) is disposed on one surface of said plate(s), the plate is fastened to the body of the hanger apparatus (1) with one end, while the other end is free in the opening inside the apparatus and can stretch from its free end as the position of the pin inside the gap (9) changes as a result of the motion of the push bolt (6).

2. A hanger apparatus (1) as in Claim 1 , **characterized by** the push bolt (6) comprising a gap (9) having at least two different positions (A, B) wherein the pin (8) can be positioned.

## Patentansprüche

1. Aufhängegerät (1), umfassend wenigstens eine Öffnung (2) zum Sichern an einer Fläche, wenigstens eine Zunge (3) zum Befestigen des elektronischen Vorrichtung (C), und einen Verriegelungsmechanismus (4), umfassend:
- eine Platte (5), umfassend wenigstens ein Arretiermittel (7), das zum Verriegeln mit der elektronischen Vorrichtung (C) dient, und wenigstens einen Stift (8), der die Position des Arretiermittels (7) ändert, und
**dadurch gekennzeichnet, dass** der Verriegelungsmechanismus (4) wenigstens einen Druckbolzen (6) umfasst, der für die erforderliche Bewegung für das Verriegeln sorgt, wobei der Druckbolzen (6) wenigstens einen Spalt (9) aufweist, der als ein Kanal für den Stift (8) dient, der Stift (8) an einer Fläche der Platte (5) angeordnet ist, die Platte (5) mit einem Ende am Grundkörper des Aufhängegeräts (1) befestigt ist, während die andere Seite frei in der Öffnung innerhalb des Geräts (1) ist, und sich von ihrem freien Ende ausdehnen kann, wenn sich die Position des Stifts (8) in dem Spalt (9) aufgrund der Bewegung des Druckbolzens (6) ändert.

2. Aufhängegerät (1) nach Anspruch 1, **dadurch gekennzeichnet, dass** der Druckbolzen (6) einen Spalt (9) mit wenigstens zwei verschiedenen Positionen (A, B) umfasst, in denen der Stift (8) positioniert werden kann.

## Revendications

1. Un dispositif de suspension (1) comprenant au moins un trou (2) pour la fixation sur une surface, au moins une languette (3) pour l'attachement à un dispositif électronique (C), et un mécanisme de verrouillage (4) comprenant
- une plaque (5) comprenant au moins une détente (7) qui permet le verrouillage avec le dispositif électronique (C) et au moins une goupille (8) qui change la position de la détente (7), et
**caractérisé en ce que** le mécanisme de verrouillage (4) comprend au moins un verrou à pression (6) fournissant le mouvement requis pour le verrouillage, le verrou à pression (6) présente une ouverture (9) servant de canal pour la goupille (8), la goupille (8) est disposée sur une surface de ladite plaque (5), la plaque (5) est attachée au corps du dispositif de suspension (1) d'une extrémité, lorsque l'autre extrémité est libre dans l'espace dans le dispositif (1) et peut s'étirer à partir de son extrémité libre tandis que la position de la goupille (8) dans l'espace (9) change en conséquence du mouvement du verrou à pression (6).

2. Un dispositif de suspension (1) selon la Revendication 1, **caractérisé par** le verrou à pression (6) comprenant une ouverture (9) ayant au moins deux positions différentes (A, B) où la goupille (8) peut être positionnée.
